Europäisches Patentamt

European Patent Office

Office européen des brevets

(11) Publication number: **0 078 655**
A2

# EUROPEAN PATENT APPLICATION

(21) Application number: 82305689.0

(22) Date of filing: 27.10.82

(51) Int. Cl.³: **B 60 T 8/08,** B 60 T 8/12, B 60 K 41/20, B 60 L 3/00

(30) Priority: 31.10.81 GB 8132876

(71) Applicant: **WESTINGHOUSE BRAKE AND SIGNAL COMPANY LIMITED, Pew Hill, Chippenham Wiltshire (GB)**

(43) Date of publication of application: **11.05.83** **Bulletin 83/19**

(72) Inventor: **Poole, John David, Cormans Farm St. Ediths Marsh, Bromham Chippenham Wiltshire (GB)**

(84) Designated Contracting States: **CH DE FR LI SE**

(74) Representative: **Page, Edmund John et al, Temple Gate House Temple Gate, Bristol BS1 6PL (GB)**

(54) **Wheel slip control system.**

(57) A wheel slip control system particularly for use on a light railway vehicle such as a mass transit car. The outputs (2, 4) of a vehicle acceleration sensor (1) and a wheel acceleration sensor (3) are compared by a comparator (5) to detect onset of wheel slip, either skidding or spinning. The comparator output (6a, 6b) is employed to modify the braking or tractive effect in a sense to eliminate the wheel slip. All braked and driven wheels or axles may be included in the systems and their respective braking/ tractive efforts modified as necessary to balance the acceleration and braking of the vehicle by making maximum use of available adhesion.

## Wheel Slip Control System

The invention relates to a wheel slip control system particularly, but not exclusively, for railway vehicles.

The invention is concerned with a system for preventing skidding of wheels under braking and also spinning of wheels under acceleration. In this context skidding, i.e. lack of wheel rotation under braking, and spinning, i.e. over rotation of a wheel under acceleration, are characterised togehter as forms of wheel slip. Both conditions result from the available adhesion being insufficient to support the retarding or accelerating forces applied to the wheel and, in the case of railway vehicles, produces a higher rate of wear of one or both the slipping vehicle wheel and the track.

Typical known anti-slip control systems include a wheel speed sensor producing an electrical signal proportional to the angular speed of the wheel and the rate of change of this signal is compared with predetermined values. If the rate of change of speed signal exceeds a predetermined value, as can happen during wheel slip, a further signal is generated and used to initiate a temporary reduction in the torque applied to the wheel so as to eliminate the slipping.

A disadvantage of these known systems arises because the chosen values for acceptable accelerations and decelerations are calculated using arbitrary values of adhesion and, occasions occur where the real adhesion is higher than the predetermined level and slip will be indicated, and corrective action initiated, when no real slip exists. Similarly cases occur where slip exists but, because the rate of change of wheel speed is less than a chosen value, corrective wheel speed is less than a chosen value, corrective action is not initiated.

An object of the present invention is to produce a wheel slip control system which is not dependent upon predetermined values of acceleration and deceleration, and which will provide a signal to initiate corrective action only when wheel slip exists in order to allow maximum use of available adhesion without risk of damage to wheels and tracks.

According to the present invention there is provided a wheel slip control system comprising vehicle acceleration sensing means providing a first indication of acceleration or deceleration of a vehicle, wheel acceleration sensing means providing a second indication of angular acceleration or deceleration of a wheel, comparator means arranged to compare said first and second indications so as to determine whether the wheel is either skidding or spinning, and control means responsive to an output from said comparator means to modify braking or driving torque applied to the wheel in a sense to tend to eliminate wheel slip.

Preferably a wheel slip control system is provided for each braked or driven wheel or, where the wheels are fixed on an axle, with each axle so that the combined effect of a plurality of such systems on a vehicle is to produce balanced braking or driving up to the maximum tractive effort which each wheel or axle can sustain. The vehicle acceleration sensing means may comprise a single accelerometer arranged to supply indications to a plurality of comparators.

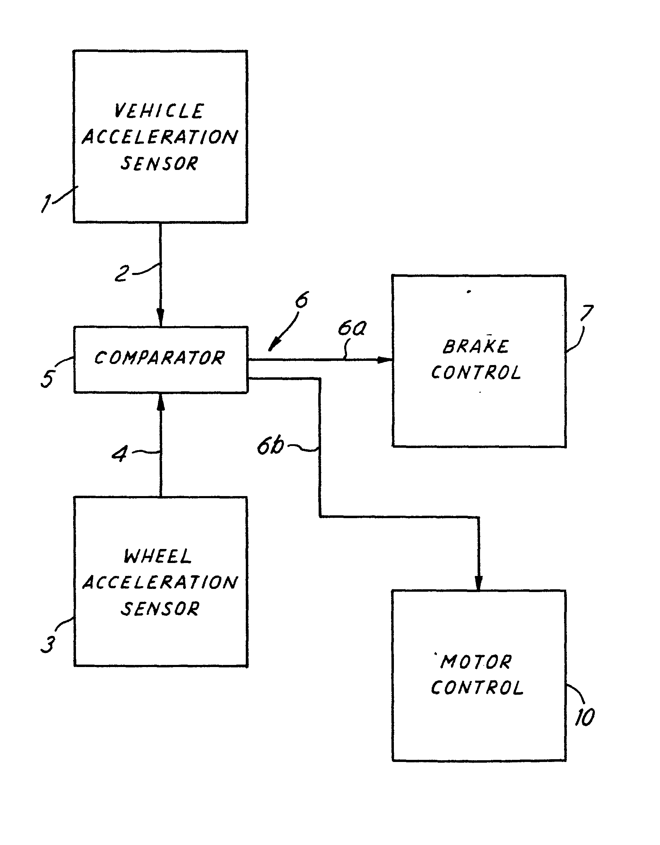

The invention and how the same may be carried into effect will now be described, by way of example only, with reference to the single Fig. of the accompanying drawing which shows in block diagram form a wheel slip control system for a mass transit or light rail vehicle.

Referring now to the drawing reference 1 indicates a vehicle acceleration sensing means which produces at output 2 an electrical analog signal the amplitude of which is proportional to the rate of change or speed of the vehicle and which is, for example, positive for vehicle acceleration and negative for deceleration. The block reference 3 in the drawing represents a wheel speed sensor which also produces an electrical signal the amplitude of which is proportional to the angular velocity of the wheel, as knowledge of the direction of rotation of the wheel is not necessary only the modulus of the sensor signal is produced so that it always has, for example, a positive value. The circuitry represented by block 3 includes an electronic differentiator circuit connected to the output of the wheel speed sensor so that the sensor signal is diferentiated with respect to time to produce a rate of change of wheel speed signal on output 4. Thus, if the wheel is stationary or rotating at constant velocity the output at 4 is zero but, whenever a change of wheel speed occurs a positive going transient pulse is produced the peak value of which is proportional to the rate of change of wheel speed.

The signals on outputs 2 and 4 are fed to a comparator, represented by block 5 which compares them to determine whether wheel slip is occurring. If the rate of change of wheel speed indication on output 4 is not commensurate with the vehicle rate of speed change indication on output 2 then the comparator produces a signal on one of two outputs generally indicated by reference 6.

For the purpose of comparing the value of the two signals 2 and 4 the vehicle accelration signal 2 is rectified, so as to produce its modulus. The two electrical signals, both now having positive amplitudes, are fed via appropriate scaling networks to a differencing amplifier which produces an output signal proportional to the difference between the two signals. In order to identify whether this signal represents a spin or a skid a logic circuit is connected to sense the sign of the signal output 2 which is then used to steer or electronically gate the amplifier output signal to either output 6a when skidding is sensed or, to output 6b when spinning is sensed. Comparator output 6a is connected to electrically responsive means 7 arranged to control operation of the vehicle brakes. Comparator output 6b is connected to an electrically responsive means which controls the vehicle traction motor.

In operation, when the brakes are applied on a moving vehicle it declerates and this is registered by accelerometer 1, thereby providing a corresponding signal on output 2. As the brakes are applied there is change in the angular velocity of the wheels and wheel speed sensor 3 reacts accordingly to provide a signal on output 4. If no skidding occurs, the rate of change of the angular velocity of the wheel will be commensurate with the deceleration of the vehicle and, the equipment will not call for corrective action. Should a wheel begin to skid the rate of change of angular velocity of the wheel will not be commensurate with vehicle deceleration and comparator 5 will produce a signal on output 6a, which will have the effect of reducing the braking torque applied to the skidding wheel.

In the opposite case where an acceleration is called for but a wheel begins to spin this will also be registered by wheel speed sensor 3 again producing a transient pulse which this time will have the effect of causing comparator 5 to produce a signal on output 6b which will have the effect of reducing the traction torque applied to the spinning wheel. This sort of arrangement lends itself to application to mass transit or like rail vehicles of the type in which the vehicles are driven by a plurality of electric motors which drive directly to one or more wheels or axles.

The system may be adapted to maintain as preselected acceleration, or deceleration, by incorporating in the control loop of the sytem a throttle lever or brake lever sensor as appropriate. For example if the signal supplied to the acceleration sensing means output 2 is provided by, say, a rheostat connected to a driver's brake control handle then the comparator 5 will operate to tend to limit the deceleration of the wheels to that commensurate with the demanded deceleration level, converse operation can be obtained by substituting at output 2 a signal corresponding to a desired maximum level of acceleration.

It is preferred to utilise the invention to produce a balanced acceleration and deceleration system by sensing the speed of each wheel of a vehicle so that none is allowed to slip, i.e. skid or spin, at any time. In such a system each vehicle, or car, may have only a single acceleration sensing means 1 which provides a plurality of outputs 2 connected to respective comparators 5.

Claims:

1. A wheel slip control system comprising vehicle acceleration sensing means (1) providing a first indication (2) of acceleration or decleration of a vehicle, wheel acceleration sensing means (3) providing a second indication (4) of angular acceleration or deceleration of a wheel, comparator means (5) arranged to compare said first (2) and second (4) indications so as to determine whether the wheel is either skidding or spinning, and control means (7, 10) responsive to an output (6a, 6b) from said comparator means (5) to modify braking or driving torque applied to the wheel in a sense to tend to eliminate wheel slip.

2. A wheel slip control system as claimed in Claim 1 wherein the wheel acceleration sensing means (3) comprises wheel speed sensing means for producing an output indicative of angular velocity which is connected to means for differentiating said output to provide said second indication.

3. A wheel slip control system as claimed in Claim 1 or Claim 2 wherein said first and second indications (2, 4) are electronic signals and the comparator means (5) comprises an electronic signal comparator circuit.

4. A wheel slip control system as claimed in any preceding claim comprising means for producing the modulus of the first or vehicle acceleration indication and the comparator means (5) is responsive to the difference between the modulus of the first indication and the second indication (2, 4).

5. A wheel slip control system as claimed in Claim 4
   including logical means to sense the sign of the
   first or vehicle acceleration indication (2) to
   steer the output of the comparator means (5) to
   operate braking control (7) or driving control
   (10) means.

6. A vehicle including a wheel slip control system as
   claimed in any preceding claim.

7. A vehicle as claimed in Claim 6 wherein the wheel
   slip control system is arranged to operate on each
   braked or driven wheel.

8. A vehicle as claimed in Claim 6 wherein the wheel
   slip control system is arranged to operate on each
   braked or driven axle.